# EUROPEAN PATENT APPLICATION

(11) **EP 1 621 526 A1**
(43) Date of publication of application: **01.02.2006**
(21) Application number: 05105757.8
(22) Date of filing: 28.06.2005
(51) Int. Cl.: C04B 35/117, C04B 35/119, C04B 35/488, C04B 35/505, C04B 35/622

(54) **A method of preparing nanostructured composite ceramic materials**

(30) Priority: 02.07.2004 IT TO20040453
(71) Applicant: Consorzio Interuniversitario Nazionale per la Scienza e Tecnologia dei Materiali (INSTM), 50132 Firenze (IT)
(72) Inventor: Montanaro, Laura, 10121 Torino (IT); Palmero, Paola, 10128 Torino (IT); Simone, Antonia, 10126 Torino (IT); Stella, Caterina, 10036 Settimo Torinese (IT)
(74) Representative: Comoglio, Elena

(57) **Abstract**

A method is described for the preparation of a ceramic nanocomposite at least bi-phasic comprising at least one oxide phase. The method comprises grinding the precursors of the phases constituting the nanocomposite until a particle size lower than 2 µm is obtained, a first heat treatment of the ground material at a temperature between 500°C and 1500°C for a time comprised between 5 minutes and 5 hours, a second grinding until mechanical-chemical activation of the powder is induced and a second sintering heat treatment at a temperature between 1000°C and 2000°C.

## Description

The present invention relates to a method of preparing nanostructured composite ceramic materials, that is at least biphasic ceramic materials in which all the final phases constituting the composite are of a nanometric size.

The recent interest in the production of nanostructured composite ceramic materials is principally caused by the potential increase in the mechanical properties upon reduction in the particle size. Therefore, such materials could replace components having a microscopic structure currently in use, with a significant increase in the performance and/or the working life, or could be used to introduce new applications in the mechanical and thermomechanical field. Moreover, if the potential functional applications are considered, the increase in the extension of the surface area as a percentage of the bulk of the particles themselves can induce increases in performance, and also brings about properties which are not present in microstructured materials. For example, in the field of optical applications, the nanostructure can lead to a selective transparency at specific wavelengths.

Nanostructured ceramic powders are currently commercially available. Such powders are produced by various methods, such as, for example, chemical, physical, dry and wet methods. However, the maintenance of the nanometric size present in these starting materials is still very critical during the sintering step of the components. This is due to the fact that the sintering process generally involves a medium to long heat treatment at high temperature, with an associated significant solid state diffusion and a consequent increase in the particle size. Furthermore, the additional problem of the high tendency of the nanometric particles to agglomerate often exists, which restrains complete densification.

Single phase nanostructured ceramic materials have already been produced starting from nanometric powders, through an activation of the powders to densification either by pre-seeding of the amorphous precursors or by mechanical-chemical effects, or by the use of advanced and high cost sintering techniques.

In the case of nanostructured composite ceramics, two technological routes have been pursued up to now. Through traditional ceramic technology, which employs conventional forming steps and a natural densification without the application of pressure, micro/nano composites have been obtained, i.e. biphasic materials in which the second, nanometric phase, is dispersed in a matrix with a micrometric particle size, with consequent limitations in the composition of the mixture.

On the other hand, the so-called nano/nano composites ('Multi-functional ceramic composites through nanocomposites technology', K. Niihara et al, Key Eng. Mater., 161-163 (1999), 527-34) have until now been obtained by nonconventional and/or high cost sintering methods, such as spark plasma sintering (SPS), microwave sintering, HIP and HP which, however, often result in significant limitations in the geometry of the components which can be obtained.

The object of the present invention is to provide a method of preparing nanostructured composites which are at least biphasic and which comprise at least one oxide phase, which method does not involving the disadvantages described above with respect to the known processes for preparation of nano/nano ceramic composites.

The terms 'nanostructured composite ceramic materials', 'nanostructured ceramic composites', 'ceramic nanocomposites' are intended to indicate any ceramic composite at least biphasic in which all the phases have a nanometric size.

More specifically, the object of the invention is to provide a method of preparing nanostructured ceramic composites which are at least biphasic and which comprise at least one oxide phase, the method employing low cost, simple technologies which are consolidated in the traditional ceramic industry, thereby allowing the production of even geometrically complex components, as opposed to the advanced densification technologies which are normally adopted for these materials.

This object is achieved by a method according to the preamble of claim 1, characterised in that it comprises the following steps:
(i) providing the amorphous or crystalline precursors of the final phases constituting the nanocomposite, the said precursors having nanometric particle size;
(ii) grinding the precursors until a ground material having a particle size lower than 2pm is obtained;
(iii) heat treating the ground material at a temperature in the range between 500°C and 1500°C and for a time in the range between 5 minutes and 5 hours;
(iv) further grinding the heat treated ground material until mechanical-chemical activation of the ground material is induced;
(v) heat sintering the activated ground material at a temperature in the range between 1000°C and 2000°C.

The method of the invention advantageously makes it possible to obtain nanostructured ceramic composites, for example of the nano/nano type ('Multifunctional ceramic composites through nano composite technology', K. Niihara et al., Key Eng. Mater., 161-163 (1999), 527-34), in which all the final phases have a particle size lower than 200 nm, and having a high density (> 95% with respect to the theoretical value), without limitations with respect to the compositional ratio of the composite's constituent phases or with respect to the geometry of the components which can be obtained. Moreover, these favourable features of the composites are obtained through process steps which advantageously include a natural sintering step - i.e. a step which does not involve the application of pressure or recourse to high cost technologies and/or technologies of particular instrumental complexity - and with the use of moderate temperatures and in any event temperatures which on average are very much lower than those of the processes for obtaining micro-structured components. Moreover, the method of the invention has a moderate environmental impact and does not require controlled atmosphere.

The method of the invention can be used for the preparation of any ceramic nanocomposite which is at least biphasic and which comprises at least one oxide phase. Preferred oxide phases are, for example, alumina, zirconia, YAG, mullite, spinel, TiO₂, SnO₂, Y₂O₃. In particular, the method of the invention can be used for the preparation of biphasic oxide-based ceramic nanocomposites (for example, alumina-zirconia, alumina-YAG, zirconia-mullite, alumina-titania) or multiphasic oxide-based ceramic nanocomposites (for example triphasic, such as, for example, alumina-YAG-spinel Mg-Al; alumina-YAG-zirconia, etc.) as well as for the preparation of ceramic nanocomposites constituted by mixtures of oxides and non-oxides, for example of the alumina-SiC type, allumina-TiC, YAG-SiC, YAG-TiC, or more complex multiphase systems.

Moreover, the potential of the method of the invention for reducing the densification temperature of ceramic composite can open new compositional prospects for hydroxyapatite-based nanostructured ceramics for biomedical applications, by overcoming the current limitations resulting from the low decomposition temperatures of hydroxyapatite.

The first step of the method of the invention consists in providing the amorphous or crystalline precursors of the final phases constituting the ceramic nanocomposite. Such precursors have a nanometric particle size. The precursors are preferably obtained by wet synthesis, for example by direct or inverse co-precipitation starting from one or more aqueous solutions of the salts of the metals the oxides of which will constitute the nanocomposite phases. The precipitation is achieved by control and modification of the pH under controlled conditions of concentration, mixing speed, temperature and stirring speed of the solutions.

The precipitate obtained - which consists of amorphous and/or crystalline metallic hydroxides - is then preferably subjected to a series of washings in de-ionised water or in aqueous solutions having a pH equal to the precipitation value, and subsequently to washings in organic media such as, for example, absolute ethanol. Finally, the precipitate is dried in an oven at a temperature of about 60°C.

The second step of the method involves grinding the precipitate until a ground material with a particle size lower than 2µm is obtained. Grinding is preferably carried out with a ball mill. Different types of mill other than ball mills can be employed, but the use of a planetary mill is greatly preferred.

Then, a thermal pre-treatment step of the ground material follows, which preferably is carried out in the air.

The thermal pre-treatment is performed at a temperature and for a time which makes it possible to achieve incipient crystallisation conditions of at least one of the oxide phases present in the composite, as well as the elimination of reaction by-products and a rather limited residual loss of mass and in any event preferably lower than 10%. This treatment time and temperature, which vary in dependence on the chemical and physical nature of the ceramic oxide or oxides present in the ground material, are determined on the basis of x-ray diffractometric and thermal investigations. The identification of the pre-treatment temperature which induces an initiation of crystallisation is crucial for the subsequent processing of the material. Specifically, the pre-treatment temperature is identified by the temperature of incipient crystallisation, i.e. a temperature which allows identification of x-ray diffraction peaks, which are clearly identifiable in the diffractogram with respect to the background of the amorphous material. This, on average, corresponds to the presence of a quantity of several percent by mass or volume of crystalline phase in the amorphous matrix. The inventors have found that suitable pre-treatment temperatures are generally in the range between 500°C and 1500°C, preferably between 700°C and 1100°C.

Once the temperature of incipient crystallisation has been identified, for example through the maximum value of an exothermic peak in differential thermal analysis (DTA), a pre-treatment time at such temperature which is sufficient to develop diffractometric peaks as previously described is then defined. The inventors have found that suitable pre-treatment times are generally in the range between 5 minutes and 5 hours, preferably between 10 minutes and 3 hours.

After the thermal pre-treatment, the thermally pre-treated ground material is subjected to a second grinding step. The ground material thereby obtained is then subjected to two sintering heat treatments.

The object of the second grinding step is that of inducing mechanical-chemical activation of the ground material to confer the necessary sinterability on the powder so that the subsequent densification stage can take place at a significantly lower temperature than those conventionally used. A ball mill is preferably used in the second grinding step. In this step of the method, ball grinding is preferred, with the use of ceramic (for example alumina, zirconia) or polymeric balls having a small size - a few millimetres in diameter for a time variable from a few hours to several tens of hours. The grinding time is a function of the nature of the grinding bodies employed.

By induction of mechanical-chemical activation of the material such a grinding step is capable of conferring variable sinterability on the ground material in dependence on the grinding time, the ratio between grinding bodies/powder to treat, the nature of the material of the grinding bodies. Clear experimental evidence of the effect of the grinding on sinterability of the ceramic powders is found by observing the dilatometric curves and the temperature of initiation of densification of the materials. In fact, by comparison between dilatometric analysis of the powders before and after the grinding stage, it can be seen that in the second case the sintering temperature is brought down by at least a hundred °C. This experimental data can be attributed to the mechanical-chemical activation induced by the second grinding step.

The sinterability is further promoted by grinding with grinding bodies of the same chemical nature as one of the constituents of the composite.

By varying the grinding parameters as a function of the composition of the composite it is possible to significantly reduce the sintering temperature of the ceramic composite and to achieve a high density (> 95% of the theoretical density of the material), thereby promoting densification compared to the growth of crystalline particles. This makes it possible to maintain the microstructure within a nanometric size range, lower than 200 nm, which is peculiar to the starting powders thanks to the chemical synthesising process with which they are obtained. The inventors have observed that suitable sintering temperatures are generally in the range between 1000°C and 2000°C, preferably between 1000°C and 1500°C, for a time generally between 30 minutes and 6 hours.

Grinding proved to be more effective if conducted by dispersing ceramic powders and grinding medium in a liquid such as absolute ethyl alcohol.

The dilatometric characterisation of the pressings obtained by simple cold uni-axial pressing (at 200-300 MPa) of the powder thus produced makes it possible to verify the densification initiation temperature for each composite ceramic material formed and to define the maximum densification temperature as well as the isotherm time.

The sintered materials produced maintain a very moderate particle size, lower than 200 nm, with a very homogeneous granulometric distribution closely around the average value, thus ensuring optimum mechanical performance.

The following example is provided for illustration purposes only and is not intended to limit in any way the scope of the invention as defined in the appended claims.

### EXAMPLE

A YAG-alumina composite (50% by volume of the two phases), is prepared starting from an aqueous solution of chlorides containing the Y (yttrium) and Al (aluminium) ions in the required stoichiometric ratio. The aqueous solution is percolated at controlled speed in an aqueous solution of NH4OH (8M). The pH of the ammonia solution must be maintained constant and equal to the value required for complete precipitation of both metal hydroxides (pH 9.0) and this is obtained by further addition of ammonia. This value is continuously monitored by means of a pHmeter, and fluctuations not greater than ± 0.2 pH units are allowed. The precipitate thus obtained is subjected to four washings with an ammonia solution at pH 9 and subsequently to two washings in absolute ethyl alcohol to prevent the formation of hard agglomerates during drying which is performed in an oven at 60°C for 48 hours. The dried gel is subjected to wet grinding (in absolute ethyl alcohol) in a planetary mill for 24 hours with a ration between 'grams of powder/number of balls' (made of agate and 10 mm in diameter) equal to 1/1.5. After grinding the powder is again dried in an oven at 60°C and subjected to granulometric analysis: grinding is carried out until an average size less than 2 µm is obtained, after ultrasonication. On the basis of the thermal and x-ray diffractometer analysis, a heat treatment at 900°C for 30 minutes was identified as the necessary pre-treatment to induce the required incipient crystallisation of one oxide phase. The heat treatment, moreover, guarantees the elimination of the reaction by-products and a final weight loss lower than 10%. The precipitate, calcined at 900°C, is subjected to further grinding in a planetary mill for 8 hours with a ratio between 'grams of powder/number of balls' of 0.25. The powder thus prepared is subject to ball grinding for 24 hours with zirconium or α-alumina balls 2.5 mm in diameter and subsequently oven dried.

After heat treatment at 1370°C with an isotherm of 3 hours at maximum temperature a sample was obtained which, when uniaxially pressed at 300 MPa, reached a density greater than 95% of the theoretical density. SEM observations have made it possible to observe a microstructure of the nano/nano type in which the average particle size is lower than 200 nm and is closely around the average value. The residual porosity is well distributed and the pores are nanometric as well.

With a treatment at 1420°C with an isotherm of 2 hours at maximum temperature a second sample was obtained which, when pressed at 300 Mpa, reached a density of about 97% with a similar microstructure.

The hardness measured on both types of samples by means of Vickers micro-indentations provided a value comprised between 20-25 GPa. By way of comparison, from data found in the literature ('Processing, micro-structure and mechanical properties of 25vol% YAG-Al₂O₃ nanocomposites', Li W. Q.et al., Nanostructured Materials 11, 8, (1999), 1073-1080), the hardness of an Alumina-YAG micro/micro or micro/nano composite ranges around 16 GPa.

An alumina-YAG micro/nano composite has a three-point resistance to bending stress of about 270 MPa, whilst the nano structured composite prepared with the method of the invention reaches a resistance to bending stress of at least 350 MPa.

## Claims

1. A method of preparing a nanostructured composite ceramic material which is at least bi-phasic and which comprises at least one oxide phase, **characterised in that** it comprises the following steps:
(i) providing the amorphous or crystalline precursors of the final phases constituting the nanostructured composite ceramic material, the said precursors having a nanometric particle size;
(ii) grinding the precursors until a ground material having a particle size less than 2 µm is obtained;
(iii) heat treating the ground material at a temperature in the range between 500°C and 1500°C and for a time in the range between 5 minutes and 5 hours;
(iv) further grinding the heat-treated ground material until mechanical-chemical activation of the ground material is induced;
(v) heat sintering the activated ground material at a temperature in the range between 1000°C and 2000°C.

2. The method according to Claim 1, wherein the said precursors are obtained by providing an aqueous solution comprising a salt of each of the constituent metals of the said at least one oxide phase of the composite and by precipitating the hydroxide of each of the said metals through pH control and variation.

3. The method according to Claim 1 or Claim 2, wherein the said at least one oxide phase is selected from the group consisting of alumina, zirconia, YAG, mullite, spinel, TiO₂, SnO₂, Y₂O₃.

4. The method according to any of Claims from 1 to 3, wherein the nanostructured ceramic composite is a biphasic composite.

5. The method according to Claim 4, wherein the nanostructured ceramic composite is selected from the group consisting of alumina-zirconia, alumina-YAG, zirconia-mullite, alumina-SiC, allumina-TiC, allumina-titania, YAG-SiC and YAG-TiC.

6. The method according to any of Claims from 1 to 3, wherein the nanostructured ceramic composite is a triphasic composite.

7. The method according to Claim 6, wherein the nanostructured ceramic composite is selected from alumina-YAG-spinel and alumina-YAG-zirconia.

8. The method according to any of Claims from 1 to 7, wherein the grinding according to step (ii) and/or (iv) is performed by ball grinding.

9. The method according to Claim 8, wherein the said grinding is wet grinding, preferably in absolute ethanol.

10. The method according to Claim 8 or Claim 9, wherein the said grinding is performed by means of grinding balls of the same chemical nature as one of the phases constituting the composite.

11. The method according to Claim 1 for the preparation of an alumina-YAG bi-phasic nanostructured ceramic composite, comprising the following steps:
(i) providing an aqueous solution comprising an aluminium (Al) salt and a yttrium (Y) salt and precipitating the Al and Y hydroxides by variation of the pH;
(ii) grinding the precipitate until a ground material having a particle size lower than 2 µm is obtained;
(iii) heat treating the ground material at a temperature in the range between 700°C and 1100°C and for a time in the range from 10 minutes to 3 hours;
(iv) further grinding the heat-treated ground material until mechanical-chemical activation of the ground material is induced;
(v) heat sintering the activated ground material at a temperature in the range between 1000°C and 1500°C and for a time in the range between 30 minutes and 6 hours.
